# EUROPÄISCHE PATENTSCHRIFT

(11) **EP 0 552 322 B1**
(45) Veröffentlichungstag und Bekanntmachung des Hinweises auf die Patenterteilung: **02.08.1995**
(21) Anmeldenummer: 92909822.6
(22) Anmeldetag: 08.05.1992
(51) Int. Cl.: G01P 1/12, G07C 5/08

(54) **VERFAHREN ZUM SELBSTTÄTIGEN FESTLEGEN DER ZUORDNUNG RICHTUNGSBEZOGENER SENSOREN ZU BEWEGUNGSRICHTUNGEN EINES FAHRZEUGS**
METHOD FOR AUTOMATICALLY DEFINING THE CORRELATION OF DIRECTIONAL SENSORS WITH THE DIRECTIONS OF MOTION OF A VEHICLE
PROCEDE DE DETERMINATION AUTOMATIQUE DE L'AFFECTATION DE CAPTEURS DIRECTIONNELS AUX SENS DE DEPLACEMENT D'UN VEHICULE

(30) Priorität: 14.05.1991 DE 4115694
(43) Veröffentlichungstag der Anmeldung: 28.07.1993
(73) Patentinhaber: Mannesmann Kienzle GmbH (HR B1220), 78052 Villingen-Schwenningen (DE)
(72) Erfinder: GRULER, Martin, D-7209 Aixheim (DE); HILGER, Gernot, D-7218 Trossingen (DE); JESCHONNECK, Harald, D-7730 Villingen-Schwenningen (DE)
(86) Internationale Anmeldenummer: EP9201016
(87) Internationale Veröffentlichungsnummer: WO9221034

(56) Entgegenhaltungen:
- EP-A- 0 087 398
- EP-A- 0 129 949
- DE-A- 3 341 471

## Beschreibung

Die Erfindung betrifft ein Verfahren zum selbsttätigen Festlegen der Zuordnung richtungsbezogener Sensoren zu Bewegungsrichtungen eines Fahrzeugs, wobei die die Sensoren beinhaltende Meßeinrichtung sowie die Auswerteeinheit zur Auswertung der miteinander zu verknüpfenden Signale Bestandteil eines für die Bewegungsbahnrekonstruktion geeigneten und in einem Fahrzeug installierten Datenerfassungsgerätes, z. B. eines Unfalldatenspeichers, sind.

Datenerfassungsgeräte der genannten Art sind hinsichtlich ihres gerätetechnischen Aufbaus bekannt. So ist z. B. aus der EP 0 118 818 B1 bekannt, wie in der Fig. 1 der genannten Schrift dargestellt, daß die oft als "black box" ausgebildeten Datenerfassungsgeräte neben Daten der Fahrzeugdynamik, wie Längsund Querbeschleunigung, auch zeitsynchron Fahrzeugzustandsinformationen, wie z. B. die Blinkerfunktion, registrieren. An anderer Stelle ist vorgeschlagen worden, auch eine magnetfeldabhängige Meßeinrichtung zur sensorischen Erfassung der nicht geradlinigen Bewegung eines Fahrzeugs in ein Datenerfassungsgerät der genannten Art zu integrieren, um die Bewegungsbahn des Fahrzeugs vollständig rekonstruierbar zu machen.

Für die sinnvolle, aufgabengemäße Signalauswertung dieser beispielhaft angeführten richtungsabhängigen Sensoren ist die Kenntnis der Einbaulage des Datenerfassungsgerätes, in welchem die Sensoren starr angeordnet sind, von entscheidender Bedeutung. Daher besteht die Notwendigkeit zur Kennzeichnung der ordnungsgemäßen Einbaulage, z. B. durch Markierungen am Gehäuse des Gerätes. Die sachgemäße Funktion des Gerätes verlangt damit die Einhaltung genauer Einbauvorschriften, wodurch an die Montage nicht unbeachtliche Anforderungen gestellt werden. Denn gerade beim nachträglichen Einbau des Datenerfassungsgerätes stößt man in der Praxis bei der notwendigen Gehäusegröße, die sich aus dem Bauraum der einzufassenden, funktional erforderlichen Baugruppen ergibt, auf nicht geringe Anordnungsprobleme. Die Platzverhältnisse sind bei den wenigen zulässigen, auch durch Sicherheitsaspekte eingeschränkten Einbauorten sehr beengt und für die Montage oft nicht leicht zugänglich. Die Folge ist zumeist eine aufwendige und damit für den Anwender teure Montage. Dieses bedeutet aber für ein auf freiwilligem Einbau beruhenden Fahrzeugdatenerfassungsgerät ein erhebliches Akzeptanzproblem.

Der Erfindung liegt nun die Aufgabe zugrunde, die Montage des Datenerfassungsgerätes zu vereinfachen und die sachgemäße Funktion der richtungsbezogenen Meßeinrichtung von der Einbaulage des Gerätes unabhängig zu machen.

Die erfindungsgemäße Lösung ist dadurch gekennzeichnet, daß die Signale der gleichartigen, richtungsbezogenen Sensoren miteinander verglichen werden und daß mittels einer logischen Signalverknüpfung und einer Signalauswertung derjenige Sensor als Datenquelle für eine bestimmte Fahrzeugbewegungsrichtung ausgewählt wird, der beim Auftreten von mindestens einem weiteren Signal, welches von einem anderen Fahrzeugaggregat generiert wird und seinerseits in eindeutiger und vorbekannter Weise dem Auftreten von Meßwertänderungen in einer Bewegungsrichtung des Fahrzeugs zugeordnet ist, erwartungsgemäß signifikante Meßwertveränderungen liefert.

Die Unteransprüche zeigen vorteilhafte Weiterbildungen der erfindungsgemäßen Lösung.

Die Erfindung hat den Vorteil, daß die in der Regel je Sensorart zweikanalig aufgebaute Meßeinrichtung zur Erfassung der Fahrzeugdynamik hinsichtlich ihrer Sensoren absolut identisch, d.h. richtungsneutral, aufgebaut werden kann und vom Hersteller werksseitig keine Festlegung getroffen werden muß, welcher sensorische Kanal für die Erfassung der Fahrzeuglängs- oder -querdynamik vorgesehen ist. Markierungen auf dem Gehäuse des Datenerfassungsgerätes und richtungsbezogene Einbauvorschriften können entfallen. Auch wird entbehrlich, beim Ausbau des Datenerfassungsgerätes, z. B. zum Auslesen der Daten in eine externe EDV-Anlage zur Rekonstruktion eines Unfallherganges, die zum Fahrzeug richtungsbezogene Einbaulage des Gerätes zu notieren, deren Kenntnis für die Bewegungsbahnrekonstruktion unabdingbar ist.

Für den Anwender des Datenerfassungsgerätes ist dieser Aspekt ebenfalls äußerst vorteilhaft. Denn dadurch ist es möglich, die Einbaurichtung für das Datenerfassungsgerät in nahezu beliebiger Weise zu den Hauptachsen des Fahrzeuges ohne Verwechslungsgefahr frei zu wählen. Das Gerät wird somit für jedermann in einfacher Weise einbaubar, ohne unbedingt eine spezielle Fachwerkstatt hinzuziehen zu müssen. Einschränkend muß jedoch angemerkt werden, daß aufgrund der in der Regel orthogonal zueinander angeordneten Sensoren Einbaulagen unzweckmäßig sind, bei denen sich die Sensorhauptachsen exakt unter 45° zu den Hauptbewegungsrichtungen des Fahrzeugs befinden. Zu bevorzugen sind die beiden in den Figuren dargestellten Anordnungen.

Das Datenerfassungsgerät erkennt durch eine logische Signalverknüpfung und die Auswertung signifikanter Meßsignalformen selbsttätig, welcher Teil der sensorischen Meßeinrichtung welche Richtungskomponente erfaßt. Ein manueller Eingriff in die Hardware des Datenerfassungsgerätes ist nicht erforderlich. Auch ist bei der Installation des Gerätes in das Fahrzeug keine Einmessung oder Kalibrierung erforderlich, was gerade für Anwendungen in der breiten Öffentlichkeit, z. B. bei Geräten, die speziell als für PKW's geeignete Unfalldatenspeicher ausgebildet sind, besonders vorteilhaft ist.

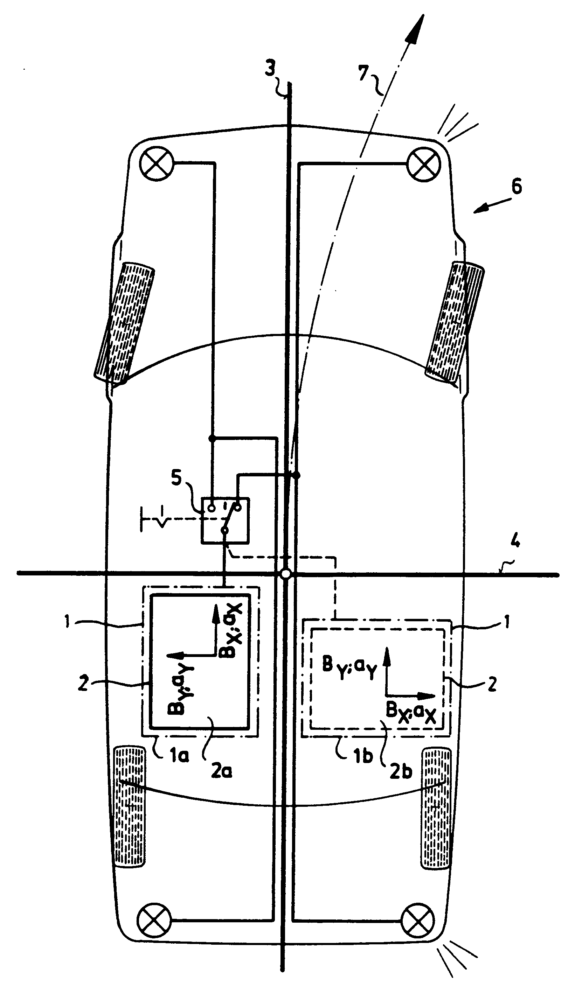

Anhand von drei Figuren soll die Erfindung nochmals kurz erläutert werden. Es zeigen
Fig. 1 Verknüpfung mit Blinkersignal
Fig. 2 Verknüpfung mit Bremssignal
Fig. 3 Verknüpfung mit Winkelgebersignal.

In einem Datenerfassungsgerät 1 der eingangs genannten Art ist die Meßeinrichtung 2 zur sensorischen Erfassung der Fahrzeugdynamik, die z. B. durch Messung der Beschleunigung a und des das Fahrzeug umgebenden Magnetfeldes B ermittelt werden kann, in der Regel geräteintern angeordnet. Zum Schutz vor unberechtigtem Eingriff muß das Gerätegehäuse sogar oftmals vom Hersteller verplombt werden. Auf die Meßeinrichtung 2 wirkende Bedienelemente sind im allgemeinen nicht vorgesehen.

Der Anwender des Datenerfassungsgerätes 1 soll, gerade wenn dieses als Unfalldatenspeicher ausgebildet ist, in die Lage versetzt werden, das Gerät 1 in nahezu beliebiger Anordnung zu den Raumachsen seines Fahrzeugs selbst zu installieren. Als Beispiel seien die Einbaupositionen 1a/2a bzw. 1b/2b angeführt. Daher ist es erforderlich, daß das Gerät 1 bei seiner Inbetriebnahme selbsttätig erkennt, in welcher Lage es im Verhältnis insbesondere zur Fahrzeuglängs- (3) bzw. -querachse (4) angeordnet wurde. Da die verkehrsrechtlichen Bestimmungen übereinstimmend für alle Fahrzeuge vorschreiben, bei Fahrtrichtungsänderungen, z. B. von Richtung 3 in Richtung 7, den Fahrtrichtungsanzeiger 5 zu betätigen, ist beispielsweise die Verknüpfung dieses Fahrzeugzustandssignals mit der mehrkanaligen, sensorischen, zur Erfassung der Fahrzeugdynamik ausgebildeten Meßeinrichtung 2 des Datenerfassungsgerätes 1 vorteilhaft, um eine Richtungszuordnung vorzunehmen.

Wird der Blinkerschalter 5 betätigt und ändert das Fahrzeug 6 in einem durch das Blinkersignal festgesetzten Zeitfenster seine Fahrtrichtung, so liefert einer der beiden je Sensorart vorgesehenen Sensoren eine stärkere Veränderung der Meßwerte als der andere. Die Meßeinrichtung 2 besteht in der Regel aus zwei orthogonal zueinander angeordneten Sensoren je Sensorart. Sie kann aber auch um die dritte Raumachse in gleicher Weise erweitert werden. Die Meßwertveränderungen werden über einen Zeitraum, der bezüglich des durch das Blinkersignal festgelegten Zeitfensters bestimmte Vor- und/oder Nachlaufzeiten einschließt, dadurch bewertet, daß die Signalveränderungen gleichartiger Sensoren miteinander verglichen werden. Die Längsdynamikwerte z. B. verändern sich zu ihren Werten vor und nach dem durch das Blinkersignal festgelegten Zeitintervall nicht in gleich signifikanter Weise. Aus dem Vergleich beider Sensorsignalveränderungen wird die Zuordnung getroffen, welcher Sensor der Meßeinrichtung 2 die Querdynamik erfaßt.

Da die Anordnung des Datenerfassungsgerätes 1 im Fahrzeug 6, z. B. die Position 1a/2a oder die Position 1b/2b, im allgemeinen nach der Erstinstallation nicht mehr geändert wird, kann nach erstmaliger Zuordnung das Zuordnungsverhältnis als konstant betrachtet werden. Nichtsdestoweniger kann aber auch, wenn besondere Umstände es erfordern, dieses Zuordnungsverhältnis von Zeit zu Zeit oder sogar fortlaufend auf die zuvor beschriebene Weise überprüft werden.

Da die Betätigung des Fahrtrichtungsanzeigers bei Fahrtrichtungsänderung zum gesetzeskonformen Fahrverhalten gehört und ungeradlinige Bewegungen den üblichen Betriebsbedingungen eines Fahrzeugs entsprechen, gelangt das Datenerfassungsgerät nach kürzester Zeit in einen für die Bewegungsbahnrekonstruktion erforderlichen, definierten Zustand. Im allgemeinen wird dieses bereits beim Anfahren des Fahrzeugs - oder zumindest kurze Zeit danach - erreicht.

Außer der Verknüpfung mit dem Blinkersignal sind noch weitere, funktional gleichwirkende Signalverknüpfungen denkbar, um das Ziel der selbsttätigen Festlegung der Zuordnung richtungsbezogener Sensoren zu den Bewegungsrichtungen eines Fahrzeugs zu erreichen.

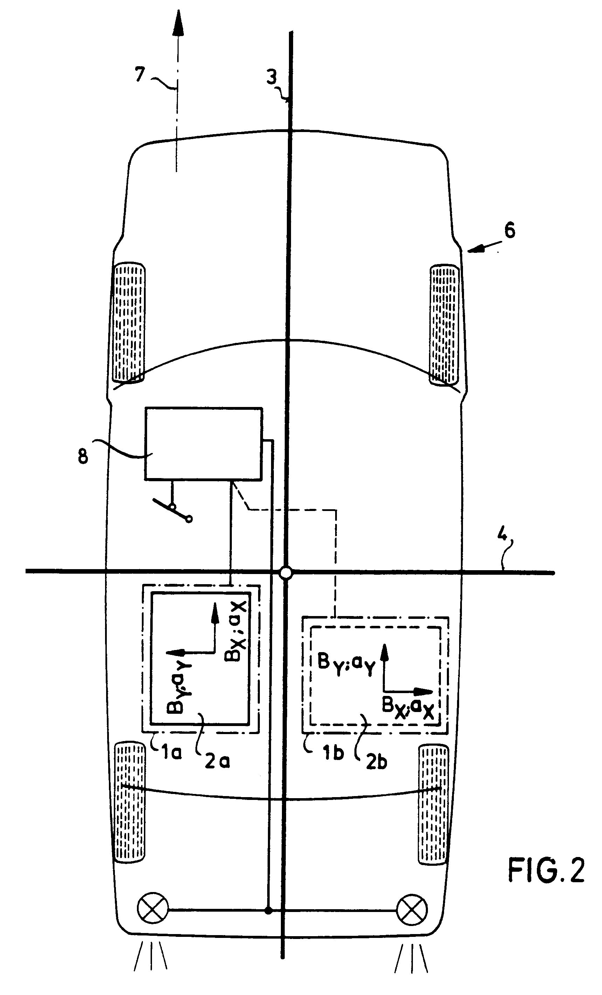

Ein zweites Ausführungsbeispiel zeigt die Fig. 2. Hier wird ein von der Bremseinrichtung des Fahrzeugs in eindeutiger Weise generiertes Signal zur Erkennung derjenigen Sensoren genutzt, welche der Fahrzeuglängsrichtung und damit der üblichen Hauptbewegungsrichtung des Fahrzeugs zugeordnet sind. Von welcher Komponente der Bremsanlage 8 das Signal abgegriffen wird, kann nach rein praktischen Gesichtspunkten entschieden werden.

Sobald das - in diesem Beispiel ganz allgemein als Bremssignal bezeichnete - Signal ansteht und gleichzeitig die Auswerteeinheit bei einem der orthogonal zueinander angeordneten Beschleunigungssensoren eine einen vorgegebenen Schwellwert überschreitende Verzögerung von z. B. mehr als 0,2 g feststellt, erkennt die Meßeinrichtung des Datenerfassungsgerätes durch diese Verknüpfung und Auswertung der erwähnten Signale selbsttätig, welcher Sensor der Längsrichtung zuzuordnen ist, da sich während eines Bremsvorgangs die Meßsignale des der Fahrzeugfahrtrichtung zugeordneten Beschleunigungssensors signifikant anders, z. B. durch einen größeren Signalhub, verändern als die Mensignale des dazu orthogonal angeordneten, gleichartigen Sensors.

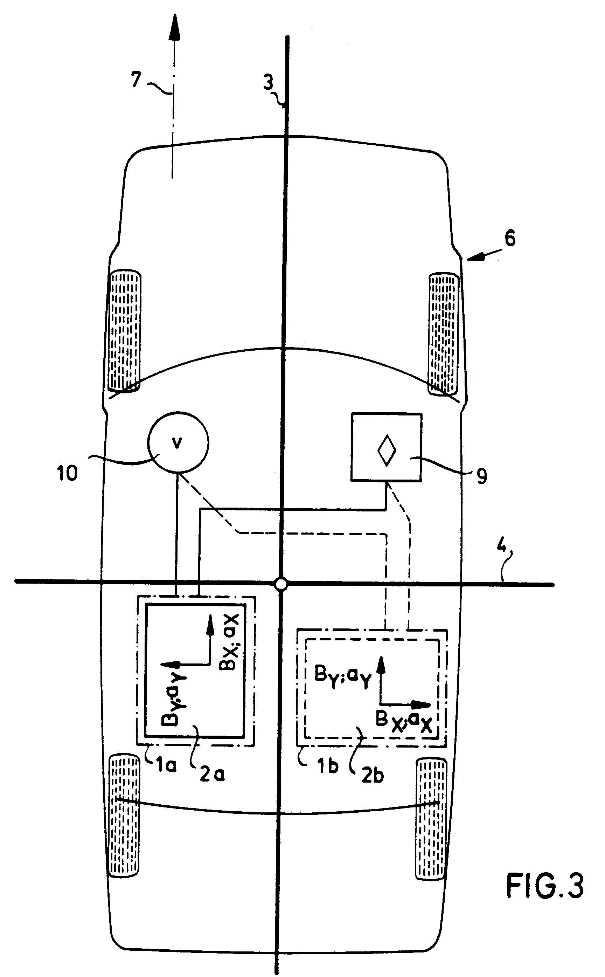

Darüber hinaus ist in der Fig. 3 noch eine dritte Möglichkeit der Signalverknüpfung dargestellt. Ist beispielsweise das Fahrzeug mit einem Drehwinkelgeber ausgerüstet und gibt dieser Geber ein Signal an die Auswerteeinheit des Datenerfassungsgerätes, so kann während der Fahrt beim Anliegen eines Signals, das einen konstanten Winkel, vorzugsweise die Hauptbewegungsrichtung des Fahrzeugs, über einem vorgegebenen Zeitfenster bedeutet, durch Verknüpfung dieses Winkelsignals mit den Meßsignalen der Beschleunigungssensoren ebenfalls selbsttätig eine Zuordnung der Einbaulage der Sensoren zu den Fahrzeughauptachsen erfolgen. Als Winkelgeber 9 kommen für diese Anwendung beispielsweise Lenkwinkelgeber, elektronische Kompasse oder ähnliche Vorrichtungen in Betracht. Ein Fahrzeugbewegungssignal kann z. B. vom Tachometer 10 abgegriffen werden.

Die hier angeführten drei Beispiele bilden keine abschließende Aufzählung, sondern verdeutlichen nur exemplarisch den Erfindungsgedanken, nämlich die Signale von Mitteln, deren Zuordnungsverhältnis zu den Hauptachsen des Fahrzeugs bekannt ist, mit den Signalen der Meßeinrichtung eines Datenerfassungsgerätes über eine Auswerteeinheit miteinander zu verknüpfen, um eine selbsttätige Festlegung der richtungsbezogenen Sensoren der Meßeinrichtung zu den Bewegungsrichtungen des Fahrzeugs zu erreichen.

## Patentansprüche

1. Verfahren zum selbsttätigen Festlegen der Zuordnung richtungsbezogener Sensoren zu Bewegungsrichtungen eines Fahrzeuges (6), wobei eine mehrere Sensoren beinhaltende Meßeinrichtung (2) sowie eine Auswerteeinheit zur Auswertung von miteinander zu verknüpfenden Signalen Bestandteil eines für eine Bewegungsbahnrekonstruktion geeigneten und in dem Fahrzeug installierten Datenerfassungsgerätes (1) sind, dadurch gekennzeichnet,
- daß der zeitliche Verlauf der Ausgangssignale gleichartiger Sensoren innerhalb eines bestimmten Zeitintervalles erfaßt wird,
- daß diese Ausgangssignale mit einem weiteren Signal logisch verknüpft werden, welches von einem Fahrzeugaggregat generiert wird und in eindeutiger, vorbekannter Weise dem erwarteten Auftreten signifikanter Meßwertveränderungen der Sensorsignale in einer bestimmten Bewegungsrichtung des Fahrzeuges zugeordnet ist und
- daß derjenige Sensor der bestimmten Fahrzeugbewegungsrichtung zugeordnet wird, für den der zeitliche Verlauf des Ausgangssignales die erwarteten signifikanten Meßwertveränderungen aufweist.

2. Verfahren nach Anspruch 1,
dadurch gekennzeichnet,
daß die Signale der Sensoren des Datenerfassungsgerätes mit dem Blinkersignal des Fahrzeugs verknüpft werden.

3. Verfahren nach Anspruch 1,
dadurch gekennzeichnet,
daß die Signale der Sensoren des Datenerfassungsgerätes mit dem Bremssignal des Fahrzeugs verknüpft werden.

4. Verfahren nach Anspruch 1,
dadurch gekennzeichnet,
daß die Signale der Sensoren des Datneerfassungsgerätes mit dem Signal eines Winkelgebers unter der Bedingung miteinander verknüpft werden, daß das Winkelgebersignal während der Fahrt in einem vorgegebenen Zeitintervall die Bedeutung eines konstanten Winkels, unter dem sich das Fahrzeug fortbewegt, hat.

5. Verfahren nach Anspruch 1,
dadurch gekennzeichnet,
daß die Signale der Sensoren des Datenerfassungsgerätes mit dem Signal eines Winkelgebers verknüpft werden, wobei das Winkelgebersignal mit einer Kurvenfahrt des Fahrzeugs in Verbindung steht.

6. Verfahren nach einem der vorstehenden Ansprüche,
dadurch gekennzeichnet,
daß die Zuordnung der Sensoren des Datenerfassungsgerätes zu den Bewegungsrichtungen des Fahrzeugs durch Erfassung und Auswertung der Meßwertveränderungen der Sensoren über einen Zeitraum vor und/oder nach dem Zeitintervall erfolgt, das durch die Betätigung des Fahrzeugaggregats, dem die erwarteten Meßwertveränderungen entlang einer bekannten Hauptachse des Fahrzeugs zugeordnet sind, festgelegt wird.

7. Verfahren nach einem der vorstehenden Ansprüche
dadurch gekennzeichnet,
daß das Zuordnungsverhältnis der Sensoren des Datenerfassungsgerätes zu den Bewegungsrichtungen des Fahrzeugs von Zeit zu Zeit oder fortlaufend überprüft wird.

## Claims

1. A process for automatically establishing the association of direction-related sensors with directions of motion of a vehicle (6), where a measuring device (2) containing a plurality of sensors and an evaluation unit for evaluating signals to be linked to one another are part of a data capture device (1) which is suitable for reconstructing a path of motion and is installed in the vehicle, characterized in that
- the time characteristic of the output signals of similar sensors within a particular time interval is determined,
- these output signals are linked logically to a further signal which is generated by a vehicle assembly and is associated in an unambiguous, previously known manner with the expected occurrence of significant changes in the measured values of the sensor signals in a particular direction of motion of the vehicle, and
- the sensor for which the time characteristic of the output signal has the expected significant changes in the measured values is associated with the particular direction of motion of the vehicle.

2. A process according to Claim 1, characterized in that the signals of the sensors of the data capture device are linked to the indicator signal of the vehicle.

3. A process according to Claim 1, characterized in that the signals of the sensors of the data capture device are linked to the braking signal of the vehicle.

4. A process according to Claim 1, characterized in that the signals of the sensors of the data capture device are linked to the signal of an angle sensor with the mutual condition that the angle sensor signal has the significance of a constant angle at which the vehicle continues to move during travel in a predetermined time interval.

5. A process according to Claim 1, characterized in that the signals of the sensors of the data capture device are linked to the signal of an angle sensor, where the angle sensor signal is connected to a cornering of the vehicle.

6. A process according to one of the preceding claims, characterized in that the sensors of the data capture device are associated with the directions of motion of the vehicle by determining and evaluating the changes in the measured value of the sensors over a period of time before and/or after the time interval which is established by actuating the vehicle assembly with which the expected changes in the measured values are associated along a known main axis of the vehicle.

7. A process according to one of the preceding claims, characterized in that the relationship of the associations of the sensors of the data capture device with the directions of motion of the vehicle are checked from time to time or continuously.

## Revendications

1. Procédé pour la détermination automatique de l'association de capteurs directionnels à des directions de déplacement d'un véhicule automobile (6), un dispositif de mesure (2) contenant plusieurs capteurs ainsi qu'une unité d'exploitation pour l'exploitation des signaux à interconnecter les uns avec les autres étant un élément constituant d'un appareil d'acquisition de données (1) approprié pour la reconstruction de trajectoires et installé dans un véhicule automobile,
caractérisé par le fait
- que le déroulement temporel des signaux de sortie de capteurs de même type est détecté en l'espace d'un intervale de temps déterminé,
- que ces signaux de sortie sont logiquement interconnectés avec un autre signal qui est généré par un organe du véhicule et associé, d'une manière non équivoque, connue d'avance, avec l'apparition attendue de variations significatives de paramètres de mesure des signaux de capteur dans une certaine direction de déplacement du véhicule et
- que celui des capteurs, pour lequel la courbe temporelle du signal de sortie présente les variations de paramètres de mesure attendues, sera associé à la direction de déplacement déterminée du véhicule.

2. Procédé selon la revendication 1,
caractérisé par le fait
que les signaux des capteurs de l'appareil d'acquisition de données seront interconnectés avec le signal de clignotant du véhicule.

3. Procédé selon la revendication 1,
caractérisé par le fait
que les signaux des capteurs de l'appareil d'acquisition de données seront interconnectés avec le signal de freinage du véhicule.

4. Procédé selon la revendication 1,
caractérisé par le fait
que les les signaux des capteurs de l'appareil d'acquisition de données seront interconnectés avec le signal d'un capteur angulaire à condition que le signal du capteur angulaire présente, pendant la course, dans un intervalle de temps prédéterminé, la signification d'un angle constant selon lequel se déplace le véhicule.

5. Procédé selon la revendication 1,
caractérisé par le fait
que les signaux des capteurs de l'appareil d'acquisition de données seront interconnectés avec le signal d'un capteur angulaire, ledit signal de capteur angulaire étant en relation avec un déplacement en virage du véhicule.

6. Procédé selon l'une quelconque des revendications précédentes,
caractérisé par le fait
que l'association des capteurs de l'appareil d'acquisition de données aux directions de déplacement du véhicule a lieu par la détection et l'exploitation des variations de paramètres de mesure des capteurs sur un espace de temps précédant et/ou succédant à l'intervalle de temps qui est déterminé par l'actionnement de l'organe de véhicule auquel sont associées lesdites variations de paramètres de mesure attendues le long d'un axe principal connu.

7. Procédé selon l'une quelconque des revendications précédentes,
caractérisé par le fait
que le rapport d'association des capteurs de l'appareil d'acquisition de données avec les directions de déplacement du véhicule sera contrôlé de temps en temps ou de manière continue.
